# EUROPEAN PATENT APPLICATION

(11) **EP 1 804 524 A1**
(43) Date of publication of application: **04.07.2007**
(21) Application number: 05028636.8
(22) Date of filing: 29.12.2005
(51) Int. Cl.: H04Q 1/14

(54) **A telecommunications assembly including at least one telecommunications module, a test bus and a kit of parts**

(71) Applicant: 3M Innovative Properties Company, St. Paul, Minnesota 55133-3427 (US)
(72) Inventor: Metral, Guy, 74300 Cluses (FR); Bonvallat, Pierre, 74300 Cluses (FR); Perrier, Gaetan, 74300 Cluses (FR)
(74) Representative: Bergen, Katja

(57) **Abstract**

A telecommunications assembly has three or more telecommunications contacts adapted to connect wires therewith, wherein one or more of the contacts are disposed in a first telecommunications module, and at least one first test bus (20) attached to the first telecommunications module (10) and extending along a face (24) of the telecommunications module (10) and along one or more of the telecommunications contacts.

A test bus (20) attachable to a telecommunications module (10) having three or more telecommunications contacts adapted to connect wires therewith so as to extend along a side (24) of the telecommunications modules (10) and along at least some of the telecommunications contacts, or to a carrier (42) adapted to carry a plurality of telecommunications modules (10) so as to extend along at least some telecommunications modules (10) is disclosed.

## Description

### Technical Field

The invention relates to a telecommunications assembly including at least one telecommunications module, a test bus and a kit of parts.

### Background

In the field of telecommunications, numerous customers are connected with the switch of a telecommunications company via telecommunications lines. Customers are also sometimes referred to as subscribers. The switch is also often called an exchange or "PBX" (central office exchange operated by the telecommunications company). Between the subscriber and the switch, sections of telecommunications lines are connected with telecommunications modules. Telecommunications modules establish an electrical connection between a wire, which is attached to the telecommunications module at a first side, and another wire, which is attached to the telecommunications module at a second side. The wires of one side can also be called incoming wires and the wires of the other side can be called outgoing wires. Plural telecommunications modules can be put together at a distribution point, such as a main distribution frame, an intermediate distribution frame, an outside cabinet or a distribution point located, for example, in an office building or on a particular floor of an office building. To allow flexibility in wiring some telecommunications lines are connected with first telecommunications modules in a manner to constitute a permanent connection. Flexibility is realized by so-called jumpers or cross connects, which flexibly connect contacts of the first telecommunications module with contacts of a second telecommunications module. These jumpers can be changed when, for example, a person moves within an office building to provide a different telephone (i.e., a different telephone line) with a telephone number the relocated person intends to keep. In the telecommunications module, disconnection points can be located in the electrical connection between the two sides. At such disconnection points, disconnection plugs can be inserted to disconnect the line. Protection plugs or magazines may also be connected at a disconnection point to the module to protect equipment connected to the wires from overcurrent and overvoltage. Moreover, test plugs can be inserted at a disconnection point in order to test or monitor a line.

Recently, Asymmetric Digital Subscriber Line (or "ADSL") technology has spread widely in the field of telecommunications. This technology allows at least two different signals to be transmitted on a single line and is achieved by transmitting the different signals at different frequencies along the same line. Signals are combined at a particular point in the telecommunications line and split at another point. In particular, at the subscriber side separate voice and data signals are combined and sent to the central office over the same line. In the central office the combined signal is split. For the transmission of voice and data signals to the subscriber, separate voice and data signals are combined at the central office, sent to the subscriber and split at the subscriber side. After splitting the signal, the so-called "plain old telephone service" (or "POTS") can be used to transmit voice signals. The remaining part of the split signal can be used to transmit data or other information. Splitters used to split or combine the signal can generally be arranged at any distribution point.

Any electronic components necessary to perform the above functions can be contained, possibly together with a printed circuit board as a base, in a functional plug, which can be called a splitter module. Similar functional plugs are protection modules, which contain one or more components that provide protection against overvoltage and/or overcurrent or testing and monitoring modules, which contain suitable electronic components and circuits in order to test and/or monitor a telecommunications line. Other functional plugs are known to those skilled in the art. These functional plugs can be insertable into a receiving space of the telecommunications module. In particular, one or more contacts of the functional plug can establish electrical contact with one or more contacts of the telecommunications module. In a state when a functional plug is not inserted opposing contacts can be in electrical contact with each other at a disconnection point. The contacts can be separated by inserting a functional plug where electrical contact between the separated contacts of the telecommunications module and the contacts of the functional plug can be established.

Published international patent application No. WO 03/079599 of the Applicant describes a contact bank, a measurement arrangement and a telecommunications assembly, with which telecommunication lines can be tested. The contact bank can have tapping contacts and the tapping contacts and/or the contact bank can be connected with a test device via a connecting structure having at least one test bus.

### Summary of the Invention

The present invention provides a telecommunications module, which is adapted to efficiently transmit a signal resulting from a testing operation to a remote test device. In another aspect, the invention provides an assembly including at least one such telecommunications module. In still another aspect, the invention provides a test bus attachable to a telecommunications module or to a carrier.

The telecommunications assembly described herein has three or more telecommunications contacts adapted to connect wires therewith, wherein one or more of the contacts are disposed in a first telecommunications module. The assembly further has at least one first test bus attached to the first telecommunications module and extending along a face of the telecommunications module and along one or more of the telecommunications contacts.

The test bus described herein is attachable to a telecommunications module having three or more telecommunications contacts adapted to connect wires therewith so as to extend along a side of the telecommunications modules and along at least some of the telecommunications contacts, or to a carrier adapted to carry a plurality of telecommunications modules so as to extend along at least some telecommunications modules

The kit of parts described herein includes an assembly and a test bus as described above.

### Brief Description of the Drawings

The invention will be described hereinafter in part by reference to non-limiting examples thereof and with reference to the drawings, in which:
FIG. 1 shows a cross-sectional view of an assembly of three telecommunications modules and one functional module; and
FIG. 2 shows a side view of a telecommunications module mounted to a carrier.

### Detailed Description of Preferred Embodiments

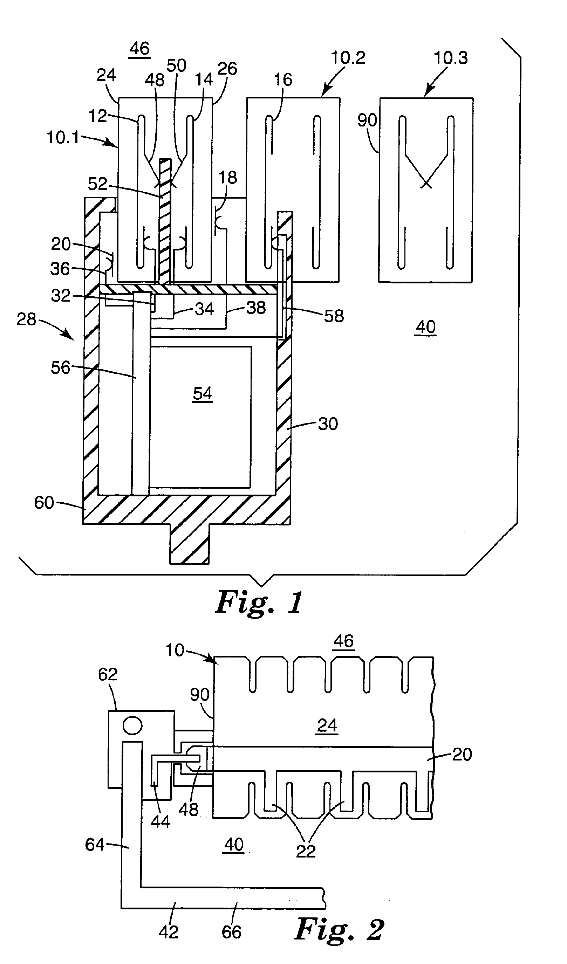

Fig. 1 shows a cross sectional view of an assembly 28 including three telecommunications modules 10.1, 10.2 and 10.3. This assembly may essentially be formed as described in published European patent application EP 1578145 A1 of the Applicant. In particular, telecommunications contacts 12, 14, and 16 can be arranged in rows extending perpendicular to the plane of the drawing of Fig. 1.

These contacts may be connected to telecommunication lines, wires or jumpers to provide service to the customer. For example, a first row of contacts 12 can include contacts adapted to transmit a POTS signal. A second row of contacts 14 can comprise contacts adapted to transmit a line signal.

The second telecommunications module 10.2 can have a third row of contacts 16 adapted to transmit a DSLAM signal. The remaining row of contacts of the second telecommunications module 10.2 as well as the rows of contacts of the third telecommunications module 10.3 can essentially be formed symmetrical to the above-described rows of contacts 12, 14 and 16. Therefore, the following detailed description will focus on the first telecommunications module 10.1 and the "left half" of the second telecommunications module 10.2, to which a combined test and splitter module 30 may be fitted. As regards the orientation of the assembly 28 shown in Fig. 1, it is noted that the orientation in use can be turned by 90° as compared to the orientation shown in Fig. 1. Thus, the "left half" of the second telecommunications module 10.2 can be the lower or upper half. Moreover, left face 24 and right face 26, described in more detail below, can be the upper or lower face, respectively.

These telecommunications modules are configured such that connections may be made on both the front side 46 and rear side 40 of the module. Contacts 12, 14 of the telecommunications module 10.1 have a portion located at the front side 46 of the assembly, which is adapted to connect an outside wire therewith, e.g. an IDC-zone. A rear portion of contacts 12, 14 have spring tabs 48 and 50, respectively, which form a disconnection point 80(see module 10.3 in figure 1).

In the example shown for telecommunications module 10.1 in Fig. 1, a projecting portion 52 of an external functional module 30 is inserted between the disconnection point formed by spring tabs 48, 50 to disconnect contacts 12, 14. The external functional module 30 may be a splitter module (active or passive), an overcurrent protection module, an overvoltage protection module, a functional module, or a module containing any combination of these functions. In the example shown in Fig. 1, the external functional module 30 is fittable to the first telecommunications module 10.1 and one half of the second telecommunications module 10.2 in combination. The projecting portion 52 of the functional module 30 can have one or more conductors imprinted thereon in order to guide the signal to circuits and/or components 54 of the functional module 30. The circuits can, for example, be provided on one or more printed circuits boards 56.

The external functional module may also provide contact to the DSLM contact 16 of telecommunications module 10.2 through a tapping contact 58. Thus, the signal transmitted via the line contact 14 can be split or combined and transmitted to or received from the POTS contact 12 and DSLAM contact 16. In addition, the tapping contact 58 can also be used to transmit a test signal to the DSLAM contact 16 and/or receive a signal, which results from a testing operation, of the contact 16.

This connection between the functional module 30 and the contacts 12, 14 can, alternatively or additionally, be realized by tapping contacts 32, 34. In the embodiment shown, the tapping contacts 32, 34 are adapted to establish electrical connection with the contacts 12, 14 in the rear portion of the telecommunications module 10.1. This corresponds to the fact that the functional module 30 is, in the embodiment shown, insertable from a rear side 40 of the telecommunications assembly 28.

In particular, the components 54 of the functional module 30 can include one or more switches, relays, protection elements or the like which address specific tapping contacts 32, 34, 58 along a row of tapping contacts. This is particularly advantageous when the functional module 30 is a multi-line functional module, which extends perpendicular to the plane of the drawing of Fig. 1 and has plural tapping contacts 32, 34, 58 extending along the functional module 30.

In the case where the functional module 30 includes a testing function, tests can be performed on selected telecommunications contacts 12, 14, 16 and the test results can be transmitted to or from a remote test device by one or more test buses 18, 20 extending along the faces 24, 26 of telecommunications module 10.1, i.e. perpendicular to the plane of the drawing of Fig. 1.

In the embodiment shown, two first test buses 18, 20 are provided, one of them denoted 18 is provided on a right face 26 and the other one denoted 20 is provided on a left face 24 of the telecommunications module 10.1. Additionally ,test bus 18 and test bus 20 may be vertically offset on their respective faces 24, 26 with the telecommunication module 10.1. The connection between the functional module 30 and the first test bus 18 is established via test contacts 38. The connection between the functional module 30 and the second test bus 20 is established via test contacts 36. Thus, the test buses 18, 20 and the test contacts 38, 36 are used to control any switches in the functional module 30 and to initiate tests to be performed. Moreover, the test buses 18, 20 and the test contacts 38, 36 can be used to transmit a signal, which results from a test, to or from a remote test device.

In the embodiment shown, the functional module 30 further comprises a housing 60, which is substantially open at a front side 46 thereof so as to accommodate the rear parts of the telecommunications modules 10.1 and 10.2. In the embodiment shown, the housing 60 extends beyond the test contacts 36, 38 as well as the tapping contacts 32, 34, 58. As previously mentioned, the functional module 30 may be fittable to telecommunications module 10.1 and the left half of telecommunications module 10.2. As regards the assembly 28, shown in Fig. 1, it should be mentioned that a functional module 30, similar to that shown in the drawing, can be fitted to the third telecommunications module 10.3 as well as the right half of the second telecommunications module 10.2, in an orientation which is substantially symmetrical to that shown for functional module 30 in Fig. 1. As can also be taken from the drawing, in the embodiment shown, the first test buses 18, 20 are substantially flat and are arranged substantially parallel to the surface of the right face 26 and left face 24 of the telecommunications module 10.1, respectively.

Fig. 2 shows a side view of a telecommunications assembly 28, particularly a telecommunications module 10.1, mounted to a carrier 42. In the embodiment shown, the carrier is an essentially trough-like carrier extending perpendicular to the plane of the drawing of Fig. 2 and having a substantially U-shaped cross-section In the embodiment shown, plural telecommunications modules similar to the telecommunications module 10.1 (shown in Fig. 2) and 10.2 (not shown) are mountable to the carrier in a suitable manner, for example by a hinge 62. In this case, any objects fitted to the rear side 40 of the telecommunications assembly 28, will describe a circle around the hinge 62 and will require a space in a left-right direction of Fig. 2. Thus, the carrier can, in this case, have a substantially L-shaped cross-section and the telecommunications module 10 can have a leg or adaptor similar to that indicated by 64 in Fig. 2, which mechanically connects the right part of the module 10 (not shown) with the bottom 66 of the carrier 42. However, this leg or adaptor is in this case integrated with the telecommunications module 10. Such an arrangement is also described in the above-mentioned published European patent application EP 1578145 A1, which is also in this respect, incorporated herein by reference.

The possibility to swivel the telecommunications module 10 around hinge 62 can be advantageous to provide access to the rear side 40 of the telecommunications assembly, for example, to fit a functional module 30 (see Fig. 1, not shown in Fig. 2) to the telecommunications module.

In the embodiment shown, the test bus 20 has projections 22 which constitute, an access points for test contacts 36 (see Fig. 1) to connect these with the test bus. Similarly, the test bus 18 can have projections which constitute, an access points for test contacts 38 (see Fig. 1) to connect these with the test bus. In the position shown in Fig. 2, the test bus 20 is electrically connected with a first conductive element 44 arranged along the carrier 42, i.e. extending perpendicular to the plane of the drawing of Fig. 2. Similarly, test bus 18 (not shown) on the opposite side of telecommunication module 10 is electrically connected with a second conductive element (not shown) arranged along the carrier 42.

Thus, in the position shown in Fig. 2, plural first test buses 20 (as well as 18, see Fig. 1) are connected with the first conductive element 44, so that these can be connected with a remote test device, and the telecommunications contacts of plural telecommunications modules can be addressed to perform tests.

When telecommunication module 10 is rotated around hinge 62 to make the rearside of the telecommunication module accessible, the electrical connection between test bus 20 and first conductive element 44 is broken. Opening of the telecommunications module would also break the electrical contact between test bus 18 and the second conductive element. Once the telecommunications module is returned to its original closed position, the electrical connection will be re-established by the sliding of the end of the first conductive element 44 into a receiving slot 48 on the end of test bus 20.

In the embodiment shown, the first conductive element 44 comprises an L-shaped cross-section with a first leg arranged substantially parallel to a leg 64 of the carrier 42, and a second leg arranged substantially perpendicular thereto and substantially parallel to the extension of first test bus 20. The conductive element 44 does not necessarily have to have an L-shaped cross-section, but any other suitable shape is conceivable. As can also be taken from Fig. 2, the projections 22 of the first test bus 20 are substantially parallel to the surface of the left face 24 of the telecommunications module 10 and, in the embodiment shown, do not extend considerably towards the viewer of Fig. 2.

An assembly of telecommunications modules of the invention comprises three or more telecommunications contacts adapted to connect wires therewith. A contact generally refers to any component adapted to establish electrical connection with at least one outside wire from a telecommunications line. For this purpose the contact can be formed, for example, as an Insulation Displacement Contact ("IDC"), a wire wrap contact or in any other suitable manner. The contacts can each have a first end adapted to connect with a wire. They can also have a second end at which they are in disconnectable contact with each other. This connection can also be formed along the contacts. The point where the contacts are in disconnectable contact with each other is referred to as a disconnection point. At the disconnection point an electrical connection with a further component can be established.

In the telecommunication assemblies of the current invention, an electrical connection with a further component may be established. This can, for example, be a contact of an external functional module such as splitter module (active or passive), an overcurrent protection module, an overvoltage protection module, a test module, or a module containing any combination of these functions. In particular, the contact can project from a housing of the external functional module.

In the case of a splitter module, the signal transmitted from the wire to the first contact is further transmitted to the electronic components within the splitter module and processed. A second contact may also, for example, be connected with the splitter module so that the signal which has been processed, split or combined by the splitter module may be transmitted via the second contact to a second wire connected with the second contact. The first and/or second contact may extend, at least be partially, outside of a housing of the telecommunications module.

As previously described, the functional module may be a test module or be another type of module with test functionality. The test module can have tapping contacts (32, 34, 38) adapted to contact the telecommunications contacts (12, 14, 16) of the telecommunications modules (10.1, 10.2). Thus, the signal which is transmitted by the telecommunications contacts to the functional module by the tapping contacts and may be processed in any suitable manner. In particular, suitable tests can be performed. Typical tests can be taken from the applicant's international patent application published as WO 2003/079599 A3, which is incorporated herein by reference. Moreover, a test module can have one or more components adapted to transmit a test signal through the telecommunications contacts to the telecommunications line. In such a case, for example, a response transmitted by the telecommunications line can be transmitted to a remote test device in order to get information about the status of the telecommunications line (i.e in-service or out-of-service). For details, reference is made to the above-mentioned published international patent application number WO 03/079599 of the Applicant, which is incorporated herein by reference, particularly with regard to any details regarding the testing and monitoring operations as such.

The telecommunications modules of the invention may further include at least one test bus which is attached to the telecommunications module and extends along a side of the telecommunications module and along at least some of the telecommunications contacts. The test bus is attached to the telecommunications module to constitute an integrated part of the module. In specific applications, the test bus can also be retro-fittable to the module, so that a telecommunications module which is, in an initial state, not adapted to transmit a signal from a test module to a remote test device, is, after fitting the test bus to the module, adapted to perform this function.

The test bus can, for example, be arranged on at least one outside face (24 or 26) of the telecommunications module. In particular, the telecommunications modules can comprise a casing 90. The casing 90 can be made of plastic or any other suitable material and can be constituted by one or more components. The casing serves to accommodate the contacts of the telecommunications module. The casing may also have specific structures for positioning the contacts. The casing can, moreover, comprise one or more cavities or receiving spaces adapted to accommodate objects such test modules or any other types of external functional modules, plugs or parts thereof. Finally, the casing may include suitable structures, typically at or near the outside, to enable the telecommunications module to be mounted to a rack or any other suitable carrier or to hold or secure objects listed above. The telecommunications modules generally have a frontside 46 and a rear side 40. Usually contacts such as described above will be exposed at the front and/or rear side to allow for connection of wires, telecommunication lines or jumpers. External functional modules may be inserted at the front side and/or from a rear side opposite the front side.

The test bus may be attached to the telecommunications module, in particular, a casing of the module, by suitable latch hooks, projections or similar structures. Correspondingly, the telecommunications module, particularly the casing of the module, can have complementary structures, such as one or more projections, with which latch hooks can cooperate. Moreover, one or more edges of the telecommunications module can be used to allow an engagement one or more latch hooks. Furthermore, the telecommunications module can have one or more slits or recesses, into which a test bus or a part thereof can be inserted in order to attach the test bus to the telecommunications module.

A test bus generally describes an electrical connection, which is adapted to run along a number of access points to transmit a test signal. In particular, the access points can be used to transmit a signal from the bus to electrical components such as switches, test devices, relays or test components, which receive, via the bus, a signal that activates these to perform a specified operation or test. Furthermore, the test bus may be used to provide any relays, which may be present in the external functional module, with power.

Moreover, the access points or test contacts of the test bus can be used to transmit a signal, which results from a testing operation, via the bus to a remote test device. The test bus can be made of any material suitable for transmitting the described electrical test signals. For example, the test bus can be made of solid metal, such as sheet metal or a metallic foil from which the test bus can be stamped. Alternatively, the test bus may be made of one or more wires or a metalized plastic part. For example, the test bus may be constituted by a metalized area on the casing of the telecommunications module, which may be plastic.

The test bus extends along a side or face of the telecommunications module and along some of the telecommunications contacts. Thus, one or more access points of the test bus can be identified along the test bus and can, for example, be associated with specific telecommunications contacts. In particular, it can be advantageous when the test bus extends along all telecommunications contacts. In such a case, a test module, adapted to test a single or only a few telecommunications lines, and can be connected both with the telecommunications contacts of the telecommunications module and the test bus of the communications module. In particular, independent from the position along the telecommunications module and, therefore, independent from the specific telecommunications contacts, which are to be tested, the test module will find an access point provided by the test bus, to allow the above-mentioned transmission of test signals.

The telecommunications contacts of the telecommunications module can, for example, be arranged in one or more rows, which can be substantially parallel to sides of the telecommunications module. For example, when rows of contacts are exposed at a front and/or rear side of the module and a left and right side of the module extends between the front and rear side, the test bus can be arranged to extend along the left or right side.

The test bus can have projections. The projections can advantageously be integrated with or integral with the test bus. In particular, the test bus having projections can be stamped or in any other appropriate manner formed from a single piece of sheet metal or metal foil. The projections can correspond to access points or test contacts of the test bus. This enables the operator to visually realize that an access point associated with a specific telecommunications contact is present at a particular location.

The projections can extend substantially parallel to that face of the telecommunications module on which the test bus is arranged. In this case, they do not substantially project from the face of the telecommunications module, on which the test bus is provided. This facilitates the handling of the telecommunications module, reduces the risk of injuries for operators, and minimizes the amount of space required by the telecommunications modules allowing for higher density assemblies.

Testing has shown advantages when the test bus is arranged along at least one of a left or right face of the telecommunications module. These faces are substantially parallel to rows of telecommunications contacts and act to separate and electrically isolate/insulate the telecommunications contacts from the test bus. As mentioned above, the telecommunications contacts can be exposed at the front and/or rear side of the telecommunications module. Thus, it can be advantageous to separate the test bus from the telecommunications contacts by locating the test bus at least one of the left or right face, which is usually free of telecommunications contacts.

Whereas the telecommunications module is, due to the test bus, adapted to cooperate with an external module, a novel assembly of at least one telecommunications module and at least one test module provides a basic assembly for testing the telecommunications lines of which the wires are connected with the telecommunications contacts of the telecommunications module. The test module has tapping contacts adapted to contact the telecommunications contacts. A tapping contact generally means any component which is adapted to establish electrical connection with a telecommunications contact. For this purpose, the tapping contact can be formed from a strip of sheet metal material or a wire. Moreover, a tapping contact can be formed by a conductor imprinted on a printed circuit board. The tapping contact can, in any case, be insertable into the telecommunications module so as to contact the telecommunications contacts at disconnection points as described above.

The test module has at least one test contact, which is adapted to connect with the test bus. Thus, the tapping contact establishes electrical connection with the telecommunications contacts to be tested and as a result, with the telecommunications lines connected thereto. For the connection between the test module and a test device that may be remote, the test contact is used. A signal can be transmitted to the test module to activate the test module by the connection between the test contact and the test bus. Moreover, a signal resulting from the test can be transmitted to a remote test device via the test contact of the test module and the test bus.

Insertion of the test module tapping contacts from a rear side of the telecommunications module may be advantageous because the front side can be kept free of the test module. Thus, the front side can be used for electrical connections, such as jumpers, which need to be changed more frequently than connections at the rear side, such as the test module. In particular, the test module, when it is insertable from a rear side, does not interfere with electrical connections at the front side which can have the requirement of allowing versatility which implies frequent changes in the connections.

The test module of the assembly described herein can have at least one switch for connecting selected tapping contacts with the test contact. In this embodiment the test module can be adapted to tap a number of telecommunications contacts associated with different telecommunications lines. When a test is performed, the test module selects an information line to be tested (i.e. the appropriate tapping contacts are activated for sending a test signal to the tapped telecommunications contacts and/or receiving a responsive test signal). Thus, at least one switch is provided in the test module in order to connect selected tapping contacts with the test contact. In this manner, a test can be performed on a selected telecommunications line and the result can be transmitted via the test contact of the test module and the test bus to a test device. Alternatively, the test module described herein does not have to be adapted to be permanently connected with plural telecommunications contacts or lines. Rather, the test module can also be a single line test module, which does not require a switch. This is because the tapping contacts of such a single line test module are, in the connected state, in electrical connection with a specific line. In this embodiment the test bus of the telecommunications module provides plural access points or test contacts for such single line test modules. It may be advantageous to have at least one such access point available in the vicinity of a telecommunications line to be tested, with which the test module can be efficiently connected.

As indicated above, splitter modules can be used to provide splitting and combining of a signal in ADSL technology. In connection with the assembly described herein, the number of external functional modules may be reduced when the test module has at least one splitter circuit integrated therein. In this case, the test module can additionally perform the splitting and combining of a telecommunications signal so that it is compatible with ADSL technology and can essentially be considered a combined test and splitter module. In particular, information can be sent to the splitter circuit in the external functional module from a remote location through the test bus, for example to activate the splitter or check its performance.

Particularly, in connection with ADSL technology, situations can arise in which the required types of contacts, i.e. line, POTS and DSLAM, are provided on more than one telecommunications module, as shown in Fig. 1. For example, as can additionally be taken from the above-mentioned published European patent application no. EP 1578145 A1 of the Applicant, which is incorporated herein by reference, particularly with regard to an assembly of more than one telecommunications module, some of the above-mentioned contacts, such as the DSLAM contacts, can be provided on a different telecommunications module, than the telecommunications module, on which line and POTS contacts are provided. When the test module of the assembly described herein is a combined test and splitter module, its tapping contacts can advantageously be adapted to contact telecommunications contacts of at least two telecommunications modules. For example, two tapping contacts can be adapted to tap a line and a POTS contact of a first module and a further tapping contact can be adapted to tap a DSLAM contact of a second module.

The assembly can further have a carrier for carrying a plurality of telecommunications modules. The carrier of the novel assembly can be provided in the form of a trough. This type of carrier can have a substantially U-shaped cross-section and a length, which allows plural telecommunications modules to be directly mounted thereon. Moreover, the : telecommunications modules can be displaceable, for example, slideable along the length of the carrier. The carrier can also comprise a substantially L-shaped cross-section, and the telecommunications modules can, firstly, be mounted to one leg of the L-cross-section. Secondly, the telecommunications module can include a second leg which connects the telecommunications module with the other leg of the L-cross-section, which thus acts as a bottom for the resulting assembly. With the described structure of two opposite legs, one, for example, being integral with the other leg, i.e. the bottom of an L-shaped carrier, and the opposite leg being provided on the telecommunications module, the resulting structure is very similar to an assembly in which telecommunications modules are mounted to a trough-like carrier having a bottom and two opposite legs. As regards the above-mentioned design, in which one leg is provided on the telecommunications module, reference is made to the Applicant's published European application No. EP 1578145 A1, which is incorporated herein by reference.

As will be apparent to those skilled in the art, the carrier can comprise suitable structures for mounting telecommunications modules thereon, such as one or more openings, projections, grooves or the like. Moreover, the carrier can include one or more profiled rails, which can, in the case of more than one rail, be arranged parallel to each other to allow the telecommunications modules to be moved along the rails. The one or more rails can have a substantially circular cross-section and/or can be provided with one or more projections, recesses, undercuts or the like, in order to allow secure mounting of telecommunications modules thereon. For this purpose, the telecommunications modules can have, as will be apparent to those skilled in the art, corresponding structures, such as latch hooks, projections or recesses. The carrier will normally at least be partially made of metal, to form part of a connection to ground.

In_the novel assembly, the carrier can have at least one conductive element 44 adapted to contact at least one test bus 18 or 20. Thus, the test bus is associated with a specific telecommunications module and provides access points or test contacts along the telecommunications module. In a similar manner, the conductive element provides access points along the carrier. Thus, the one or more first test buses of the one or more telecommunications modules can be connected with the first conductive element. The conductive element can, thus, form a part of the connecting structure, which connects a test module with a remote test device. The other parts of this connecting structure can be the one or more first test buses and the test contacts of the test modules.

The novel test bus attachable to a telecommunications module, as described herein, essentially has those features derived from the above description of a test bus attached to a telecommunications module so as to form an integrated part thereof. This test bus constitutes a component which can be added to a telecommunications module in order to allow tests performed thereon in the above-described manner. Moreover, a conductive element can be attachable to a carrier adapted to carry a plurality of telecommunications modules so as to extend along at least some telecommunications modules. In this case, the test bus described herein can constitute a conductive element as described more fully above.

The present invention has now been described with reference to an individual embodiment. The foregoing detailed description and embodiment have been given for clarity of understanding only. No unnecessary limitations are to be understood or taken from it. All references to front, rear, left and right sides, horizontal, vertical and insertion directions etc., are exemplary only and do not limit the claimed invention. It will be apparent to those skilled in the art that many changes can be made to the embodiment described without departing from the scope of the invention. Thus, the scope of the present invention should not be limited to the exact details and structures described herein, but rather by the structures described by the language of the claims, and the equivalents of those structures.

## Claims

1. A telecommunications assembly (28) having:
three or more telecommunications contacts (12, 14, 16) adapted to connect wires therewith, wherein one or more of the contacts are disposed in a first telecommunications module, and
at least one first test bus (18, 20) attached to the first telecommunications module (10) and extending along a face (24, 26) of the telecommunications module (10) and along one or more of the telecommunications contacts (12, 14).

2. The assembly in accordance with claim 1, wherein the test bus (18, 20) has projections (22).

3. The assembly in accordance with claim 2, wherein the projections (22) extend substantially parallel to the face (24) on which the test bus (20) is arranged.

4. The assembly in accordance with any of the preceding claims, wherein the test bus (18, 20) is arranged along at least one of a left face(24) or right face (26), which are substantially parallel to at least one row of telecommunications contacts (12, 14) in the first telecommunications module.

5. An assembly (28) in accordance with one of the preceding claims and at least one test module (30) having tapping contacts (32, 34, 58) adapted to contact the telecommunications contacts (12, 14, 16) of the telecommunications assembly, and at least one test contact (36, 38) adapted to connect the test bus (18, 20).

6. The assembly in accordance with claim 5, wherein the tapping contacts (32, 34, 58) are insertable from a rear side (40) of the telecommunications module (10).

7. The assembly in accordance with claim 5 or 6, wherein the test module (30) has at least one switch for connecting selected tapping contacts (32, 34, 58) with the test contact (36, 38).

8. The assembly in accordance with one of claims 5 to 7, wherein the test module (30) has at least one splitter circuit.

9. The assembly in accordance with one of claims 5 to 8, wherein the tapping contacts (32, 34, 58) are adapted to contact telecommunications contacts (12, 14, 16) of at least two telecommunications modules (10.1, 10.2).

10. The assembly in accordance with one of claims 5 to 9, further having a carrier (42) for carrying a plurality of telecommunications modules (10), the carrier (42) having at least one conductive element (44) adapted to contact at least one first test bus (20).

11. A test bus (18, 20) attachable to a telecommunications module (10) having three or more telecommunications contacts (12, 14, 16) adapted to connect wires therewith so as to extend along a side (24, 26) of the telecommunications modules (10) and along at least some of the telecommunications contacts (12, 14, 16), or to a carrier (42) adapted to carry a plurality of telecommunications modules (10) so as to extend along at least some telecommunications modules (10).

12. A kit of parts including a telecommunications module or an assembly in accordance with any of claims 1 to 10 and a test bus in accordance with claim 11.
